# EUROPEAN PATENT SPECIFICATION

(11) **EP 1 395 005 B1**
(45) Date of publication and mention of the grant of the patent: **13.04.2016**
(21) Application number: 03255325.7
(22) Date of filing: 27.08.2003
(51) Int. Cl.: H04W 28/22

(54) **Improved method for streaming in a mobile telecommunications network**
Verbessertes Verfahren für strömende Daten in einem Mobiltelekommunikationsnetz
Procédé amélioré pour la transmission des données en continu dans un réseau de télécommunication mobile

(30) Priority: 30.08.2002 GB 0220239
(43) Date of publication of application: 03.03.2004
(73) Proprietor: Hutchison Whampoa Three G IP (Bahamas) Limited, Nassau, New Providence (BS)
(72) Inventor: Danneel, Jerome, Berkshire, SL6 8RG (GB)
(74) Representative: Patel, Nikesh

(56) References cited:
- WO-A-02/06986
- US-A- 6 072 787

## Description

The present invention relates to the implementation of streaming in a mobile telecommunications network and in particular a Universal Mobile Telecommunications System (UMTS) network which enables the UMTS Terrestrial Radio Access Network (UTRAN) to enhance the experience of streaming users while saving radio network resources.

### Background

Currently over the internet, users can access multimedia files, such as video clips or audio clips, in two ways. The first one is download and the second one is streaming.

When downloading a file, the user first makes a copy of the whole file on his/her terminal and then plays it from the terminal. Hence, there is a certain delay during which the user has to wait before they can view or listen to the file. The larger the multimedia file, the longer the delay.

On the other hand, when streaming a multimedia file, the file is played directly as it arrives from the internet onto the user's terminal. Hence, the delay before starting to play does not depend on the size of the file and the delay could be virtually zero. Another advantage of streaming is that the user does not need to store the whole file on his/her terminal, hence requiring much less memory.

However, streaming a file requires that there is no interruption in the flow of data coming from the internet, otherwise the multimedia file being played to the user would be interrupted. Because the internet is an unreliable network, such a temporary lack of data is very likely. As a matter of fact, a multimedia file streamed over the internet is sent in individual packets. Although the streaming server (the equipment sending the multimedia file to the user) tries to feed the streaming player (the application running on the user's terminal and showing the data to the user) with a continuous flow of packets, each packet is transmitted individually over the internet on a best-effort basis. The travelling time across the network is then different for each packet and some packets might even be lost due to congestion in the internet.

Therefore, the only way to guarantee that the streaming player always has data to present to the user is to make sure that the data arrives in the streaming player a few seconds before it is to be played. Hence, all streaming players perpetually buffer a few seconds of multimedia files to accommodate delayed or lost packets. This buffer is of a more or less constant length and basically fills with data coming from the internet and empties when data has been shown to the user. However, this buffering means that the user still has to wait a certain amount of time before the file can start to be played. The longer the buffer, the lower the probability that data is missed from the played file, but also the longer the user has to wait.

One technique used over the internet to reduce this delay while streaming is called Fast Start. Basically, the streaming server, instead of always sending the data at the rate the file is to be shown to the user, sends the first few seconds of the file at a much higher throughput. The delay before showing the file can be significantly reduced if a high throughput can be achieved on the first few seconds of the file. For instance, if the player needs to buffer 10 seconds of the file to ensure low loss of data, the initial delay could be only 5 seconds if the server can send some initial data at a throughput twice the rate at which the file is shown to the user. Fast Start streaming over the internet requires the player and the server to support this functionality and to agree to use it.

In a UMTS packet-switched network, both download and streaming delivery techniques will be supported to provide the users with multimedia files. However, streaming over a UMTS network will be able to use real-time bearers. Such bearers do not work on a best-effort basis like the internet, but can guarantee the bit rate and the delay for the transmission of the packets over the network. As a result, the delivery of the packets to the player is much more reliable than over the internet, and temporary congestion in the network should not affect the streaming data flow.

Nevertheless, because the radio link remains non-reliable by nature (due to changing radio conditions) and because the quality of the radio link (in terms of errors, delays and packet losses) has a very high cost in terms of resources, it is foreseen that some buffering will still be required, even if in smaller amount than for streaming over the internet. Since buffering is required, then Fast Start streaming techniques could also be used to reduce the delay during which the user must wait during the initial buffering. However, fast start streaming over a UMTS network and specifically over a real-time bearer poses a problem.

Indeed, the efficient use of a real-time UMTS bearer assumes that the terminal is "Quality of Service (QoS) aware", i.e. it can determine the precise characteristics of the bearer needed to carry the service and then request those characteristics from the network. In the case of streaming, the player will determine the bandwidth needed by mean of signalling from the server (the bandwidth parameter in the SDP file describing the multimedia file) and then request a real-time bearer service with the appropriate bit rate from the UMTS network. The bearer service provided by the UMTS core network to the terminal is called Packet Data Protocol (PDP) context. Such a real-time bearer would have the following attributes:
- Traffic class = streaming
- Guaranteed bit rate = derived from the bandwidth parameter

The UMTS core network then requests in turn a bearer service from the UTRAN for this terminal. The bearer service provided by the UTRAN to the UMTS core network for a particular terminal is called Radio Access Bearer (RAB). Its attributes are the same as that of the PDP context above.

Finally, a radio link (radio bearer) is established by the UTRAN with the terminal. This bearer will have characteristics based on the QoS parameters of the RAB. Basically, the radio bearer will allow data to be sent to the user at the guaranteed bit rate but no more, in an attempt to optimise the resources.

Because, the guaranteed bit rate basically equals the rate at which the data are to be played, this means that fast start streaming, even if used, would not reduce the delay, since the throughput of the link is limited in the UMTS network by the guaranteed bit rate.

US publication 6072787 teaches a data transmission method in a mobile communication system where the data transfer rate is adjusted during a call in accordance with resources available to the mobile communication network at that instance.

3GPP specifications also allow the terminal to specify a maximum bit rate higher than the guaranteed bit rate. However, the use and interpretation of this maximum bit rate is not very clear in the UTRAN, and might lead to significant waste of resources if set too high and not used properly. Indeed, the 3GPP documents simply recommend the UTRAN to use the maximum bit rate to do code reservation. In the case of streaming, and especially that of fast start streaming, such interpretation might lead to the UTRAN reserving downlink code resource, Node B channel elements and transport resources for a very high bit rate for the lifetime of the bearer. However, these will be used only for the first few seconds, the rest of the lifetime of the bearer being used at the guaranteed bit rate only, with the higher level resources being unnecessarily reserved.

### Summary of the Invention

A method for implementing streaming in a UMTS Network for transmitting data to a mobile terminal, in which:
(a) the terminal transmits a request for a radio link for data transfer to be established, the request including a request for a first bit rate and a request for a second bit rate higher than said first bit rate;
(b) if sufficient network resources are available, a link with the mobile terminal is established by the UMTS terrestrial radio access network (UTRAN) with the second bitrate; otherwise a link is established at the highest bit rate that resources allow while not exceeding the second bit rate and not falling below the first bit rate;
wherein said bit rate in (b) is only allocated to the link for a predetermined initial time period of data transfer; and wherein on expiry of said predetermined initial time period the bit rate allocated to the link is reduced to the first bit rate for the rest of the data transfer to the mobile terminal.

A UMTS network capable of implementing streaming from the network to a mobile terminal, the network comprising:
means arranged to receive a request from a mobile terminal for the establishment of a radio link between the mobile communications network and the mobile terminal, the request defining a first bit rate and a second bit rate higher than said first bit rate;
means arranged to establish a radio link by a UMTS terrestrial radio access network (UTRAN) at said second bit rate if sufficient network resources are available; otherwise said means is arranged to establish a link at the highest bit rate that resources allow while not exceeding the second bit rate and not falling below the first bit rate; and
means arranged to control the bit rate of the radio link such that said bit rates are allocated for only a predetermined initial time period, said means further arranged to reduce the bit rate allocated to the link to said first bit rate on expiry of said predetermined initial time period.

Thus, a method for implementing fast start packet-switched streaming in a mobile telecommunications network such as a UMTS network over real-time bearers that will improve the user's experience of the service as well as minimising the waste of resources is proposed. The present idea also specifies the requirements on the terminal as well as on, in the case of a UMTS network, the UTRAN to make this method work efficiently.

The present invention will now be discussed in more detail with reference to a UMTS mobile telecommunications network, however it will be appreciated that the described method could be applied to any mobile communications network to achieve the stated aims.

It will be appreciated that in the specific example of streaming in a UMTS network, the "first bit rate" is equivalent to the guaranteed bit rate and the "second bit rate" is equivalent to the maximum bit rate requested when fast start streaming is required.

The method first relies on a terminal's ability to request a UMTS bearer with different QoS parameters when fast start is to be used than when fast start is not to be used. The difference will mainly reside in the value of the requested maximum bit rate.
- If fast start is not to be used, then the maximum bit rate will generally be the same as the guaranteed bit rate.
- If fast start is to be used, then the maximum bit rate shall be higher than the guaranteed bit rate.

The exact calculation of the maximum bit rate should be performed by the terminal and be based on its capabilities in terms of radio bearers, buffering and streaming player.

Secondly, the method also relies on the way that the UTRAN will interpret these parameters and a specific UTRAN behaviour based on the following 3 steps.

Step 1 corresponds to the call admission process. If the requested maximum and guaranteed bit rates are different, the UTRAN shall try to establish a radio bearer for the maximum bit rate. In the case where this maximum bit rate cannot be established because of load reason (admission control failed), then the UTRAN shall try to establish the highest bit rate possible between the maximum and the guaranteed. Only if the guaranteed bit rate cannot be established should the bearer request be rejected.

Step 2 starts when a bearer higher than the guaranteed bit rate has been established, and when fast start streaming commences. The UTRAN shall monitor the radio bearer in order to detect the end of the fast start phase. This could be achieved in either of the following two ways:
- The UTRAN could start a timer (set by the operator and dependent on the bit rate) at the setup of the bearer, and declare the end of the fast start phase upon the expiry of the timer.
- The UTRAN could monitor the throughput of the radio bearer, and declare the end of the fast start phase when a certain criteria is met, such as the actual throughput is lower than X kbps for more than Y seconds.

The first method above would probably be easier to implement and optimise than the second one, but the capacity gain of the second might be bigger.

Step 3 occurs when the UTRAN has detected the end of the fast start phase. At this point the UTRAN shall reconfigure the whole radio bearer to the guaranteed bit rate. This means that all resources (code, channel elements, transport, etc.) will be scaled down to allow only the guaranteed bit rate to be transmitted.

In the foregoing the present idea has been described in relation to streaming and in particular streaming bearers. The dynamic control of the streaming bearer bit rate allows the implementation of Fast Start streaming on a UMTS system while conserving resources once the Fast Start period has ended. However it will be appreciated that the present idea is more generally concerned with the dynamic control of the streaming bearer bit rate from the UTRAN side whatever the actual data being transmitted represents. For example, any data type which warrants a real time bearer due to its delay sensitive nature and which requires buffering could have applied to it the dynamic control of the bit rate of the bearer which is the subject of the present idea

In the foregoing the present idea has been described in relation to the beginning of the life of a bearer. However it will be appreciated that dynamic control of the bit rate allocated to a bearer can be undertaken during the life time of the bearer. In the context of streaming, the streaming player on the mobile terminal may be arranged to keep the streaming server updated with the status of its buffers thereby enabling the streaming player to adjust its data flow according to the requirements of the steaming player's buffers. However, as discussed above, due to the fixed nature of the bearers in terms of bit rate, the streaming server could supply data at a higher rate but this would not translate to the streaming player due to the UTRAN limitations on the bearer bit rate. Additionally the UTRAN has no information on the status of the streaming player buffers. However, the UTRAN does monitor data being sent to it from the core network, and it is therefore proposed that the present invention be applied to the UTRAN so that if the streaming server attempts to send data at a higher rate the UTRAN responds by resetting the bearer to the maximum bit rate, as requested by the mobile terminal at the establishment of the bearer. The streaming player buffers may be emptied if there is interference on the radio link which causes a drop in data rates or if the user utilises a fast forward or rewind option on the streaming player.

### Benefits of the present idea

The present idea proposes a method of implementing fast start streaming in a UMTS packet-switched network.

It enables a reduction in the time that the user has to wait before the multimedia file can be shown to him.

However, if radio resources are not sufficient to allow fast start streaming, then the service that the user would get from the network is the same as in the case where fast start was not used.

Also the present method enables the UTRAN to make an efficient use of all its resources, since the whole radio bearer is reconfigured.

Finally, the present method is fully compliant with the 3GPP Release 99 and later standards and does not involve any new signalling between the different equipments. As a matter of fact, this method mainly specifies the UTRAN behaviour for a particular type of RAB request for which the 3GPP specifications are quite vague since such behaviour is assumed to be implementation dependent.

## Claims

1. A method for implementing streaming in a UMTS Network for transmitting data to a mobile terminal, in which:
(a) the terminal transmits a request for a radio link for data transfer to be established, the request including a request for a first bit rate and a request for a second bit rate higher than said first bit rate;
(b) if sufficient network resources are available, a link with the mobile terminal is established by the UMTS terrestrial radio access network, UTRAN, with the second bitrate; otherwise a link is established at the highest bit rate that resources allow while not exceeding the second bit rate and not falling below the first bit rate;
wherein said bit rate in (b) is only allocated to the link for a predetermined initial time period of data transfer; and wherein on expiry of said predetermined initial time period the bit rate allocated to the link is reduced to the first bit rate for the rest of the data transfer to the mobile terminal.

2. A method as claimed in claim 1 in which the predetermined time period is dependent on the bit rate allocated for the initial time period.

3. A method as claimed in claim 1 or 2 in which an actual data rate used by said link during the initial time period is monitored, and when the actual data rate falls to the first bit rate, the first bit rate is allocated to the link.

4. A method as claimed in any preceding claim in which the bit rates to be requested are calculated by the mobile terminal.

5. A method as claimed in claim 4 in which said calculation of the second bit rate is based on buffering and streaming player capabilities of the mobile terminal and on capabilities of radio bearers.

6. A method as claimed in any preceding claim in which the said link is established on a real-time bearer.

7. A method as claimed in any preceding claim in which the link is used for streaming of a data file to the terminal.

8. A method as claimed in any of the preceding claims in which the streaming is packet-switched streaming.

9. A method as claimed in claim 7 or 8 in which the data file is a multimedia data file.

10. A method as claimed in any of claims 7 to 9 in which during the initial time period Fast Start streaming is conducted.

11. A method as claimed in claim 10, in which the first bit rate is the bit rate required for streaming and the second bit rate is a higher bit rate used for Fast Start streaming.

12. A UMTS network capable of implementing streaming from the network to a mobile terminal, the network comprising:
means arranged to receive a request from a mobile terminal for the establishment of a radio link between the mobile communications network and the mobile terminal, the request defining a first bit rate and a second bit rate higher than said first bit rate;
means arranged to establish a radio link by a UMTS terrestrial radio access network, UTRAN, at said second bit rate if sufficient network resources are available; otherwise said means is arranged to establish a link at the highest bit rate that resources allow while not exceeding the second bit rate and not lower than the first bit rate; and
means arranged to control the bit rate of the radio link such that said bit rates are allocated for only a predetermined initial time period, said means further arranged to reduce the bit rate allocated to the link to said first bit rate on expiry of said predetermined initial time period.

13. A network as claimed in claim 12 in which the predetermined time period is dependent on the bit rate allocated for the initial time period.

14. A network as claimed in claim 13 further comprising a data throughput monitoring means which is arranged to monitor an actual data rate used by said link during the initial time period, and when the actual data rate falls to the first bit rate the first bit rate is allocated to the link.

15. A network as claimed in any of claims 12 to 14 in which the bit rates to be requested are calculated by the terminal.

16. A network as claimed in claim 15 in which said calculation of the second bit rate is based on buffering and streaming player capabilities of the terminal and on capabilities of radio bearers.

17. A network as claimed in any of claims 12 to 16 in which the said link is established on a real-time bearer.

18. A network as claimed in any of claims 12 to 17 in which the link is used for streaming of a data file to the terminal.

19. A network as claimed in any of the preceding claims in which the streaming is packet-switched streaming.

20. A network as claimed in claim 18 or 19 in which the data file is a multimedia data file.

21. A network as claimed in any of claims 18 to 20 in which during the initial time period Fast Start streaming is conducted.

22. A network as claimed in claim 21 in which the first bit rate is the bit rate required for streaming and the second bit rate is a higher bit rate used for Fast Start streaming.

## Patentansprüche

1. Verfahren zum Implementieren von Streaming in einem UMTS-Netz zum Senden von Daten an ein mobiles Endgerät, bei dem:
(a) das Endgerät eine Anforderung für die Herstellung einer Funkverbindung zur Datenübertragung sendet, wobei die Anforderung eine Anforderung für eine erste Bitrate und eine Anforderung für eine zweite Bitrate, die höher als die genannte erste Bitrate ist, beinhaltet;
(b) falls ausreichende Netzressourcen verfügbar sind, von dem terrestrischen UMTS-Funkzugangsnetz UTRAN eine Verbindung mit dem mobilen Endgerät mit der zweiten Bitrate hergestellt wird; ansonsten eine Verbindung auf der höchsten Bitrate hergestellt wird, die die Ressourcen zulassen, während sie die zweite Bitrate nicht überschreitet und nicht unter die erste Bitrate fällt;
wobei die genannte Bitrate in (b) der Verbindung nur für eine vorbestimmte anfängliche Datenübertragungszeitspanne zugeteilt wird; und wobei bei Ablauf der genannten vorbestimmten anfänglichen Zeitspanne die der Verbindung zugeteilte Bitrate für den Rest der Datenübertragung an das mobile Endgerät auf die erste Bitrate reduziert wird.

2. Verfahren nach Anspruch 1, bei dem die vorbestimmte Zeitspanne von der für die anfängliche Zeitspanne zugeteilten Bitrate abhängt.

3. Verfahren nach Anspruch 1 oder 2, bei dem eine von der genannten Verbindung während der anfänglichen Zeitspanne verwendete Ist-Datenübertragungsrate überwacht wird und, wenn die Ist-Datenübertragungsrate auf die erste Bitrate abfällt, der Verbindung die erste Bitrate zugeteilt wird.

4. Verfahren nach einem der vorhergehenden Ansprüche, bei dem die anzufordernden Bitraten vom mobilen Endgerät berechnet werden.

5. Verfahren nach Anspruch 4, bei dem die genannte Berechnung der zweiten Bitrate auf Buffering- und Streaming-Client-Funktionen des mobilen Endgeräts und auf Funkträgerfunktionen basiert.

6. Verfahren nach einem der vorhergehenden Ansprüche, bei dem die genannte Verbindung auf einem Echtzeit-Träger hergestellt wird.

7. Verfahren nach einem der vorhergehenden Ansprüche, bei dem die Verbindung für das Streaming einer Datendatei zum Endgerät verwendet wird.

8. Verfahren nach einem der vorhergehenden Ansprüche, bei dem das Streaming paketvermitteltes Streaming ist.

9. Verfahren nach Anspruch 7 oder 8, bei dem die Datendatei eine Multimedia-Datendatei ist.

10. Verfahren nach einem der Ansprüche 7 bis 9, bei dem während der anfänglichen Zeitspanne Fast Start-Streaming durchgeführt wird.

11. Verfahren nach Anspruch 10, bei dem die erste Bitrate die für Streaming erforderliche Bitrate ist und die zweite Bitrate eine für Fast Start-Streaming verwendete höhere Bitrate ist.

12. UMTS-Netz, das Streaming von dem Netz zu einem mobilen Endgerät implementieren kann, wobei das Netz Folgendes aufweist:
eine Einrichtung, die zum Empfangen einer Anforderung von einem mobilen Endgerät für die Herstellung einer Funkverbindung zwischen dem Mobilfunknetz und dem mobilen Endgerät angeordnet ist, wobei die Anforderung eine erste Bitrate und eine zweite Bitrate, die höher als die genannte erste Bitrate ist, definiert;
eine Einrichtung, die zum Herstellen einer Funkverbindung durch ein terrestrisches UMTS-Funkzugangsnetz UTRAN mit der genannten zweiten Bitrate angeordnet ist, falls nicht genug Netzressourcen verfügbar sind; wobei die genannte Einrichtung ansonsten angeordnet ist zur Herstellung einer Verbindung auf der höchsten Bitrate, die die Ressourcen zulassen, während die zweite Bitrate nicht überschritten wird, und die nicht niedriger als die erste Bitrate ist; und
eine Einrichtung, die zur Regelung der Bitrate der Funkverbindung angeordnet ist, so dass die genannten Bitraten nur für eine vorbestimmte anfängliche Zeitspanne zugeteilt werden, wobei die genannte Einrichtung ferner angeordnet ist, um die der Verbindung zugeteilte Bitrate bei Ablauf der genannten vorbestimmten anfänglichen Zeitspanne auf die genannte erste Bitrate zu reduzieren.

13. Netz nach Anspruch 12, bei dem die vorbestimmte Zeitspanne von der für die anfängliche Zeitspanne zugeteilten Bitrate abhängt.

14. Netz nach Anspruch 13, das ferner eine Datendurchsatzüberwachungseinrichtung aufweist, die angeordnet ist zum Überwachen einer von der genannten Verbindung während der anfänglichen Zeitspanne verwendeten Ist-Datenübertragungsrate und, wenn die Ist-Datenübertragungsrate auf die erste Bitrate abfällt, der Verbindung die erste Bitrate zugeteilt wird.

15. Netz nach einem der Ansprüche 12 bis 14, bei dem die anzufordernden Bitraten vom Endgerät berechnet werden.

16. Netz nach Anspruch 15, bei dem die genannte Berechnung der zweiten Bitrate auf Buffering- und Streaming-Client-Funktionen des Endgeräts und auf Funkträgerfunktionen basiert.

17. Netz nach einem der Ansprüche 12 bis 16, bei dem die genannte Verbindung auf einem Echtzeit-Träger hergestellt wird.

18. Netz nach einem der Ansprüche 12 bis 17, bei dem die Verbindung für das Streaming einer Datendatei zum Endgerät verwendet wird.

19. Netz nach einem der vorhergehenden Ansprüche, bei dem das Streaming paketvermitteltes Streaming ist.

20. Netz nach Anspruch 18 oder 19, bei dem die Datendatei eine Multimedia-Datendatei ist.

21. Netz nach einem der Ansprüche 18 bis 20, bei dem während der anfänglichen Zeitspanne Fast Start-Streaming durchgeführt wird.

22. Netz nach Anspruch 21, bei dem die erste Bitrate die für Streaming erforderliche Bitrate ist und die zweite Bitrate eine für Fast Start-Streaming verwendete höhere Bitrate ist.

## Revendications

1. Procédé pour mettre en oeuvre une transmission en continu dans un réseau UMTS afin de transmettre des données à un terminal mobile, dans lequel :
(a) le terminal transmet une requête d'établissement d'une liaison radio pour un transfert de données, la requête comportant une requête demandant un premier débit binaire et une requête demandant un second débit binaire supérieur audit premier débit binaire ;
(b) si des ressources réseau suffisantes sont disponibles, une liaison avec le terminal mobile est établie par le réseau d'accès radio terrestre UMTS, soit réseau UTRAN, avec le second débit binaire ; dans le cas contraire une liaison est établie au débit binaire le plus élevé que permettent les ressources sans dépasser le second débit binaire et sans tomber en dessous du premier débit binaire ;
dans lequel ledit débit binaire selon (b) n'est attribué à la liaison que pendant une période de temps initiale prédéterminée de transfert de données ; et dans lequel à l'expiration de ladite période de temps initiale prédéterminée le débit binaire attribué à la liaison est réduit au premier débit binaire pour le reste du transfert de données au terminal mobile.

2. Procédé selon la revendication 1, dans lequel la période de temps prédéterminée dépend du débit binaire attribué pendant la période de temps initial.

3. Procédé selon la revendication 1 ou 2, dans lequel un débit de données effectif utilisé par ladite liaison durant la période de temps initiale est contrôlé, et quand le débit de données effectif tombe au premier débit binaire, le premier débit binaire est attribué à la liaison.

4. Procédé selon l'une quelconque des revendications précédentes, dans lequel les débits binaires à requérir sont calculés par le terminal mobile.

5. Procédé selon la revendication 4, dans lequel ledit calcul du second débit binaire est basé sur des capabilités de tamponnage et de transmission en continu du lecteur du terminal mobile et des capabilités des supports radio.

6. Procédé selon l'une quelconque des revendications précédentes, dans lequel ladite liaison est établie sur un support en temps réel.

7. Procédé selon l'une quelconque des revendications précédentes, dans lequel la liaison est utilisée pour transmettre en continu un fichier de données au terminal.

8. Procédé selon l'une quelconque des revendications précédentes, dans lequel la transmission en continu est une transmission en continu commutée par paquets.

9. Procédé selon la revendication 7 ou 8, dans laquelle le fichier de données est un fichier de données multimédia.

10. Procédé selon l'une quelconque des revendications 7 à 9, dans lequel durant la période de temps initiale une transmission en continu de type Fast Start est effectuée.

11. Procédé selon la revendication 10, dans lequel le premier débit binaire est le débit binaire requis pour une transmission en continu et le second débit binaire est un débit binaire supérieur utilisé pour une transmission en continu du type Fast Start.

12. Réseau UMTS capable de mettre en oeuvre une transmission en continu depuis le réseau vers un terminal mobile, le réseau comprenant :
un moyen agencé pour recevoir depuis un terminal mobile une requête d'établissement d'une liaison radio entre le réseau de communications mobiles et le terminal mobile, la requête définissant un premier débit binaire et un second débit binaire supérieur audit premier débit binaire ;
un moyen agencé pour établir une liaison radio par un réseau d'accès radio terrestre UMTS, soit réseau UTRAN, audit second débit binaire si des ressources réseau suffisantes sont disponibles ; dans le cas contraire ledit moyen est agencé pour établir une liaison au débit binaire le plus élevé que permettent les ressources sans dépasser le second débit binaire et non inférieur audit premier débit binaire ; et
un moyen agencé pour contrôler le débit binaire de la liaison radio de telle sorte que lesdits débits binaires soient attribués pendant une période de temps initiale prédéterminée uniquement, ledit moyen étant agencé en outre pour réduire le débit binaire attribué à la liaison audit premier débit binaire à l'expiration de ladite période de temps initiale prédéterminée.

13. Réseau selon la revendication 12, dans lequel la période de temps prédéterminée dépend du débit binaire attribué pendant la période de temps initiale.

14. Réseau selon la revendication 13, comprenant en outre un moyen de contrôle de débit de données qui est agencé pour contrôler un débit de données effectif utilisé par ladite liaison durant la période de temps initiale, et quand le débit de données effectif tombe au premier débit binaire, le premier débit binaire est attribué à la liaison.

15. Réseau selon l'une quelconque des revendications 12 à 14, dans lequel les débits binaires à requérir sont calculés par le terminal.

16. Réseau selon la revendication 15, dans lequel ledit calcul du second débit binaire est basé sur des capabilités de tamponnage et de transmission en continu du lecteur du terminal et des capabilités des supports radio.

17. Réseau selon l'une quelconque des revendications 12 à 16, dans lequel ladite liaison est établie sur un support en temps réel.

18. Réseau selon l'une quelconque des revendications 12 à 17, dans lequel la liaison est utilisée pour transmettre en continu un fichier de données au terminal.

19. Réseau selon l'une quelconque des revendications précédentes, dans lequel la transmission en continu est une transmission en continu commutée par paquets.

20. Réseau selon la revendication 18 ou 19, dans lequel le fichier de données est un fichier de données multimédia.

21. Réseau selon l'une quelconque des revendications 18 à 20, dans lequel durant la période de temps initiale une transmission en continu de type Fast Start est effectuée.

22. Réseau selon la revendication 21, dans lequel le premier débit binaire est le débit binaire requis pour une transmission en continu et le second débit binaire est un débit binaire supérieur utilisé pour une transmission en continu du type Fast Start.
